(19) Europäisches Patentamt
European Patent Office
Office européen des brevets

(11) EP 4 738 484 A1

(12) EUROPEAN PATENT APPLICATION
published in accordance with Art. 153(4) EPC

(43) Date of publication:
06.05.2026 Bulletin 2026/19

(21) Application number: 24831945.1

(22) Date of filing: 25.06.2024

(51) International Patent Classification (IPC):
H01M 6/16 (2006.01)    H01M 4/40 (2006.01)

(52) Cooperative Patent Classification (CPC):
H01M 4/40; H01M 6/16

(86) International application number:
PCT/JP2024/023003

(87) International publication number:
WO 2025/005085 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 JP 2023105167

(71) Applicant: Panasonic Intellectual Property
Management Co., Ltd.
Kadoma-shi, Osaka 571-0057 (JP)

(72) Inventor: NISHITANI, Satoshi
Kadoma-shi, Osaka 571-0057 (JP)

(74) Representative: Eisenführ Speiser
Patentanwälte Rechtsanwälte PartGmbB
Postfach 10 60 78
28060 Bremen (DE)

(54) **LITHIUM PRIMARY BATTERY**

(57) A lithium primary battery includes a positive electrode; a negative electrode, and an electrolyte solution. The positive electrode contains at least one selected from the group consisting of manganese dioxide and fluorinated graphite. The negative electrode includes a lithium alloy. The lithium alloy contains magnesium, and the content of the magnesium in the lithium alloy is 10 mass% or less. The electrolyte solution contains a nonaqueous solvent and a solute, and the solute includes a sulfonylimide compound.

*FIG. 1*

**Description**

[Technical Field]

The present disclosure relates to a lithium primary battery.

[Background Art]

Lithium primary batteries have high energy density and low self-discharge, and are therefore used as power sources for many electronic devices. For a positive electrode of lithium primary batteries, manganese dioxide and the like are used. For a negative electrode of lithium primary batteries, for example, lithium metal or lithium alloy in the form of sheet (foil) is used.

Patent Literature 1 proposes "a lithium negative electrode for use in a lithium-organic electrolyte battery including an electrolyte containing a lithium salt dissolved therein, and a separator disposed so as to face the negative electrode, in which a lithium body originally laminated with a coating layer of aluminum-magnesium alloy on a surface adjacent to the separator is used as the negative electrode, the lithium negative electrode being configured such that an aluminum-magnesium-lithium ternary alloy is formed by diffusion, to increase the negative electrode surface area and improve the pulse performance of the battery."

Patent Literature 2 proposes "a cylindrical electrolyte solution primary battery, comprising: an electrode group having a wound structure in which a positive electrode containing manganese dioxide and a negative electrode are spirally wound with a separator interposed therebetween, wherein the negative electrode has a metal lithium-containing layer constituted only of a single continuous layer on one side of a current collector, 85% or more of the area of a surface of the current collector on which the metal lithium-containing layer is to be formed is covered with the metal lithium-containing layer, and a lithium-aluminum alloy is formed on at least part of a surface opposite to the surface facing the current collector of the metal lithium-containing layer".

Patent Literature 3 proposes "a lithium primary battery, comprising: a positive electrode containing iron disulfide as a positive electrode active material; a negative electrode including a lithium alloy as a negative electrode active material; an electrode group wherein the positive electrode and the negative electrode are wound with a separator interposed therebetween; and an electrolyte solution, wherein the lithium alloy contains at least one of magnesium and tin in an amount of 0.02 to 0.2 mol%."

Patent Literature 4 proposes "an alkaline metal battery, comprising: a metal packaging material; and a battery cell housed in the metal packaging material, the battery cell including a positive electrode, a negative electrode, and a nonaqueous electrolyte solution containing a nonaqueous solvent and an electrolyte dissolved therein, wherein the electrolyte includes an imide-based alkali metal salt represented by $MN(R^1SO_2)(R^2SO_2)$ (where M represents an alkali metal ion, and $R^1$ and $R^2$ each independently represent a fluorine atom or a fluoroalkyl group having 1 to 6 carbon atoms), a cyclic carbonate having an unsaturated bond, and another alkali metal salt containing fluorine, and the metal packaging material contains stainless steel in at least part of a surface that comes in contact with the nonaqueous electrolyte solution".

[Citation List]

[Patent Literature]

Patent Literature 1: Japanese Laid-Open Patent Publication No. S58-209862
Patent Literature 2: Japanese Laid-Open Patent Publication No. 2012-138225
Patent Literature 3: International Publication WO 2012/066709
Patent Literature 4: Japanese Laid-Open Patent Publication No. 2013-125696

[Summary of Invention]

[Technical Problem]

In a lithium primary battery, during its long-term use, the internal resistance may increase, causing degradation in output characteristics in some cases.

[Solution to Problem]

One aspect of the present disclosure relates to a lithium primary battery, including: a positive electrode; a negative electrode; and an electrolyte solution, wherein the positive electrode contains at least one selected from the group consisting of manganese dioxide and fluorinated graphite, the negative electrode includes a lithium alloy, the lithium alloy contains magnesium, a content of the magnesium in the lithium alloy is 10 mass% or less, the electrolyte solution contains a nonaqueous solvent and a solute, and the solute includes a sulfonylimide compound.

[Advantageous Effects of Invention]

According to the present disclosure, it is possible to suppress the degradation in output characteristics of a lithium primary battery during its long-term use.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

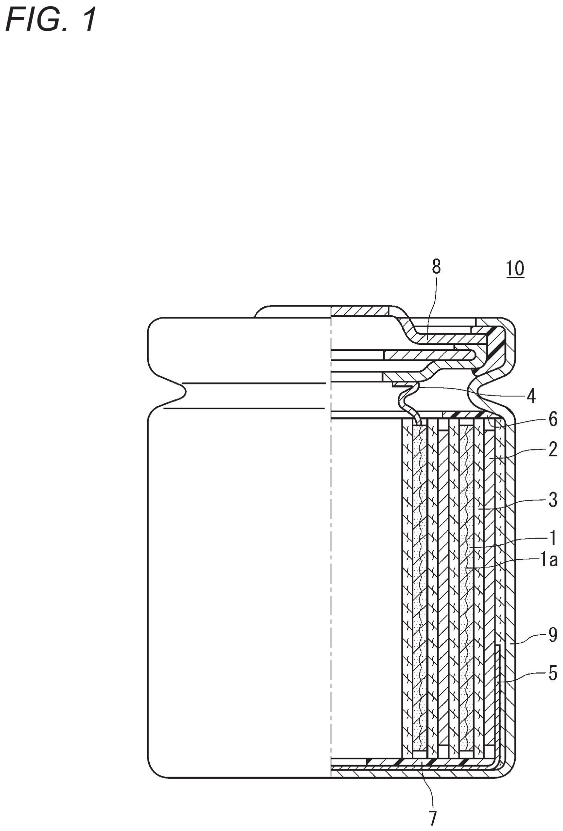

[FIG. 1] A front view, partially in sectional, of a lithium primary battery according to an embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less". In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A lithium primary battery according to one embodiment of the present disclosure includes a positive electrode, a negative electrode, and an electrolyte solution (nonaqueous electrolyte solution). The positive electrode contains at least one selected from the group consisting of manganese dioxide and fluorinated graphite. The negative electrode includes a lithium alloy. The lithium alloy contains magnesium (Mg), and the Mg content in the lithium alloy is 10 mass% or less. The electrolyte solution contains a nonaqueous solvent and a solute. The solute includes a sulfonylimide compound.

When the above configuration is satisfied, the increase in internal resistance during long-term use is suppressed, and the degradation in output characteristics (e.g., low-temperature pulse characteristics) due to an increase in internal resistance is suppressed. For example, an output degradation rate described later is reduced. Although not yet clear, the detailed mechanism behind this can be presumed as follows. The solvent (e.g., a carbonic acid ester) and the sulfonylimide compound contained in the electrolyte solution react with each other on the negative electrode surface containing Mg, forming an organic-inorganic hybrid surface film containing an organic component derived from the solvent and an inorganic component derived from the sulfonylimide compound, on the surface of the negative electrode (lithium alloy containing Mg). This surface film has low resistance and exhibits excellent durability. Furthermore, with the above surface film, because of its good wettability with the negative electrode (lithium alloy containing Mg), the effect of achieving low resistance and improved durability in the negative electrode by the above surface film can be remarkably obtained. Consequently, the reaction on the negative electrode surface proceeds uniformly, the lithium consumption at the negative electrode is done uniformly, and the deficiency of the negative electrode (foil break) is suppressed in the end stage of discharge, so that the lithium of the negative electrode can be utilized without waste. These factors act to suppress the degradation in output characteristics during long-term use.

However, when the Mg content in the lithium alloy is more than 10 mass%, the the negative electrode resistance is raised due to an increase of the proportion of Mg in the negative electrode, which may cause degradation in output characteristics in some cases.

(Sulfonylimide compound)

The sulfonylimide compound (sulfonylimide salt) serving as the solute can generate a sulfonylimide anion and a cation (e.g., an alkali metal ion, such as Li ion) in the electrolyte solution. Examples of the sulfonylimide compound include a fluorine-containing sulfonylimide compound. Such a compound is exemplified by a compound represented by a formula $LiN(SO_2Ra)(SO_2Rb)$. In the formula, Ra and Rb are each independently a fluorine atom or a fluorinated alkyl group having 1 to 4 carbon atoms. The fluorinated alkyl group may be linear or branched. Examples of the fluorinated alkyl group include $CF_3$, $C_2F_5$, $C_3F_7$, and $C_4F_9$. Specific examples of the sulfonylimide compound include lithium bis(fluorosulfonyl)imide: $LiN(SO_2F)_2$ (hereinafter may be referred to as LiFSI), lithium bis(trifluoromethanesulfonyl)imide: $LiN(CF_3SO_2)_2$, lithium (fluorosulfonyl)(trifluoromethanesulfonyl)imide: $LiN(SO_2F)(CF_3SO_2)$, and lithium bis(pentafluoroethanesulfonyl)imide: $LiN(CF_3CF_2SO_2)_2$. Among them, LiFSI is particularly preferred as the sulfonylimide compound. The proportion of LiFSI in the sulfonylimide compound may be 60 mass% or more, may be 70 mass% or more, may be 90 mass% or more, and may be 100 mass%. These sulfonylimide compounds may be used singly, or in combination of two or more kinds.

The content of the sulfonylimide compound in the electrolyte solution may be 0.1 mass% or more and 20 mass% or less, may be 0.5 mass% or more and 20 mass% or less, and may be 4 mass% or more and 20 mass% or less. Here, the content of the sulfonylimide compound in the electrolyte solution is a ratio (percentage) of the mass of the sulfonylimide compound to the total mass of the electrolyte solution. For example, immediately after production of battery (or during preparation of electrolyte solution), the content of the sulfonylimide compound in the electrolyte solution is desirably within the above range. However, in the battery passed for a certain period of time immediately after production, in which part of the sulfonylimide compound has been consumed for the formation of a surface film, the content of the sulfonylimide compound in the electrolyte solution may be a value below the above range. In this case, too, the above-described effect by the lithium alloy containing Mg and the sulfonylimide compound can be seen.

For the analysis of the electrolyte solution, for example, liquid chromatography-mass spectrometry (LC/MS) or gas chromatography-mass spectrometry (GC/MS) can be used. Ultraviolet spectroscopy (UV) may be performed in addition to nuclear magnetic resonance analysis (NMR), infrared absorption spectroscopy (IR), and mass spectrometry (MS).

(Lithium alloy)

The negative electrode includes a lithium alloy, and the lithium alloy contains Mg in an amount of 10 mass% or less. From the viewpoints of reducing the internal resistance and ensuring the capacity, the Li content in the lithium alloy may be 89 mass% or more, or 90 mass% or more, and may be 95 mass% or more.

From the viewpoint of improving the output characteristics during long-term use, it is preferable that the lithium alloy further contains Al. Hereinafter, a lithium alloy containing Mg and being substantially free of Al will be sometimes referred to as a "Li-Mg alloy". A lithium alloy containing Mg and Al will be sometimes referred to as a "Li-Mg-Al alloy". Note that "being substantially free of" means that the content is below the detection limit in a compositional analysis of the lithium alloy (e.g., ICP atomic emission spectroscopy, atomic absorption spectroscopy, etc.).

The increase in internal resistance during long-term use can be suppressed by the addition of Al, whereas Al is apt to segregate in Li. On the other hand, Mg has excellent dispersibility in Li. When a lithium alloy contains both Mg and Al, the good dispersibility of Mg can suppress the segregation Al, and thus, the Li reaction is unlikely to proceed non-uniformly during the battery use. In this case, the effects by Mg and Al are stably obtained throughout the negative electrode, and Li is uniformly consumed on the negative electrode surface, so that the proportion of Li that can contribute to the discharge reaction in the end stage of discharge can be further increased. When Al is contained in addition to Mg, a low-resistance surface film is likely to be formed stably, and the output voltage in the end stage of discharge is further increased. In addition, the increase in internal resistance during long-term use and the degradation in output characteristics associated therewith are further suppressed.

From the viewpoint of suppressing the degradation in output characteristics during long-term use, the Mg content in the lithium alloy is preferably 0.01 mass% or more and 10 mass% or less, more preferably 0.05 mass% or more and 8 mass% or less, further more preferably 0.1 mass% or more and 7 mass% or less. Note that the above Mg content in the lithium alloy is the Mg content in a Li-Mg alloy or a Li-Mg-Al alloy.

From the viewpoint of suppressing the degradation in output characteristics during long-term use, the Al content in the lithium alloy (Li-Mg-Al alloy) may be 0.01 mass% or more and 2 mass% or less, and may be 0.01 mass% or more and 1.5 mass% or less. From a similar viewpoint, the total content of Mg and Al in the Li-Mg-Al alloy is preferably 0.01 mass% or more and 10 mass% or less. The molar ratio Mg/Al of Mg to Al may be in the range of, for example, 0.05 or more and 13 or less.

The lithium alloy may contain other metal elements except Li, Mg, and Al. Examples of other metal elements include Sn, Ni, Pb, In, Na, K, Ca, Fe, Ba, and Sr. From the viewpoints of ensuring the discharge capacity and stabilizing the internal resistance, the total content of the metal elements except lithium contained in the lithium alloy is preferably 11 mass% or less.

The composition of the lithium alloy can be determined by inductively coupled plasma (ICP) atomic emission spectroscopy or atomic absorption spectroscopy (AAS).

A detailed description will be given below of the lithium primary battery of the present disclosure.

[Lithium primary battery]

(Positive electrode)

The positive electrode contains, as a positive electrode active material, at least one selected from the group consisting of manganese dioxide and fluorinated graphite. As the manganese dioxide, electrolytic manganese dioxide subjected to firing is preferably used. The positive electrode containing manganese dioxide exhibits relatively high voltage and is excellent in pulse discharge characteristics. The manganese dioxide may be in a mixed crystal state containing multiple crystalline states. The positive electrode may contain a manganese oxide other than manganese dioxide. Examples of the manganese oxide other than manganese dioxide include $MnO$, $Mn_3O_4$, $Mn_2O_3$, and $Mn_2O_7$. Preferably, manganese dioxide is a major component of the manganese oxide contained in the positive electrode. The major component herein means that the proportion of the manganese dioxide in the manganese oxide is 50 mass% or more. The proportion of the manganese dioxide in the manganese oxide may be 70 mass% or more, and may be 90 mass% or more.

The positive electrode includes, for example, a positive electrode current collector, and a positive electrode mixture layer supported on the positive electrode current collector. The positive electrode mixture layer is formed by, for example, applying or packing a wet-state positive electrode mixture onto a surface of a sheet-shaped positive electrode current collector or into a positive electrode current collector, and applying a pressure thereto in the thickness direction, followed by drying.

The positive electrode mixture may contain a positive electrode active material, a binder, a conductive agent, and the like. Examples of the binder include fluorocarbon resins such as polytetrafluoroethylene, rubber particles, and acrylic resins. Examples of the conductive agent include conductive carbon materials. The conductive carbon materials include, for example, natural graphite, artificial graphite, carbon black, and carbon fibers.

Examples of the material of the positive electrode current collector include stainless steel, aluminum, and titanium. As the positive electrode current collector, a current collector with pores is preferred. Examples of the current collector with pores include expanded metal, net, and punched metal.

When the battery is of a coin type, the positive electrode may be constituted by attaching a ring-like positive electrode current collector whose section is L-shaped, onto a pellet of positive electrode material mixture, and may be constituted of a pellet of positive electrode material mixture only. The pellet of positive electrode material mixture can be obtained by, for example, compression-molding and drying a wet-state positive electrode material mixture prepared by adding an appropriate amount of water to a positive electrode active material and an additive.

When the battery is of a cylindrical type, a positive electrode including a sheet-shaped positive electrode current collector, and a positive electrode material mixture layer held on the positive electrode current collector can be used. As the sheet-shaped positive electrode current collector, a current collector with pores is preferred. Examples of the current collector with pores include an expanded metal, a net, and a punched metal. The positive electrode material mixture layer can be obtained by, for example, applying or packing the above wet-state positive electrode mixture onto a surface of a sheet-shaped positive electrode current collector or into a positive electrode current collector, and applying a pressure thereto in the thickness direction, followed by drying.

(Negative electrode)

The negative electrode can include, for example, a lithium alloy in the form of foil (sheet). The lithium alloy can be formed into a desired shape and a desired thickness, according to the type, size, specified performance, and the like of the lithium primary battery.

When the battery is of a cylindrical type, the negative electrode may be a lithium alloy in the form of foil (sheet) without a negative electrode current collector, although it may include a negative electrode current collector (e.g., copper foil) supporting a lithium alloy. When the lithium alloy contains Mg, the negative electrode can be constituted by using only a lithium alloy in the form of foil (sheet), without using a negative electrode current collector, because Mg, which has relatively high strength, will remain in the end stage of discharge. By using a lithium alloy containing Mg, the fracture and the partial deficiency of the negative electrode in the end stage of discharge that occur when the negative electrode is without a negative electrode current collector can be suppressed. The shape of the negative electrode (lithium alloy) can be maintained even in the end stage of discharge, and even when not using a negative electrode current collector, the overall conductivity of the negative electrode can be ensured.

When the battery is of a coin type, a hoop-shaped lithium alloy is punched into a disc shape, which can be used as the negative electrode. When the battery is of a cylindrical type, a sheet-shaped lithium alloy may be used as the negative electrode. The sheet can be obtained by, for example, extrusion molding. Specifically, in a cylindrical battery, a lithium alloy foil having a shape with a longitudinal direction and a lateral direction is used.

(Electrolyte solution)

The electrolyte solution contains a nonaqueous solvent, and a solute dissolved in the nonaqueous solvent. The nonaqueous solvent may be an organic solvent that can be generally used in the electrolyte solution of a lithium primary battery. Examples of the nonaqueous solvent include an ether, an ester, and a carbonic acid ester. As the nonaqueous solvent, dimethyl ether, $\gamma$-butyrolactone, propylene carbonate (PC), ethylene carbonate (EC), 1,2-dimethoxyethane (DME), and the like can be used. The nonaqueous solvent may be used singly, or in combination of two or more kinds.

From the viewpoint of improving the discharge characteristics of the lithium primary battery, the nonaqueous solvent preferably contains a cyclic carbonic acid ester whose boiling point is high, and a chain ether which exhibits low viscosity even at low temperatures. The cyclic carbonic acid ester preferably includes at least one selected from the group consisting of PC and EC, of which PC is particularly preferred. The chain ether preferably includes DME.

The solute includes at least a sulfonylimide compound (sulfonylimide salt), and may include a compound other than the sulfonylimide compound. Examples of the solute other than the sulfonylimide compound include lithium salts, such as $LiCF_3SO_3$, $LiClO_4$, $LiBF_4$, $LiPF_6$, and $LiRcSO_3$, where Rc is a fluorine atom or a fluorinated alkyl group having 1 to 4 carbon atoms. The solute (lithium salt) may be used singly, or in combination of two or more kinds. The proportion of the sulfonylimide compound in the solute may be 60 mass% or more, may be 70 mass% or more, may be 90 mass% or more, and may be 100 mass%.

The concentration of the lithium ions contained in the electrolyte solution (total concentration of lithium salts) may be, for example, 0.2 mol/L or more and 2.0 mol/L or less, and may be 0.3 mol/L or more and 1.5 mol/L or less.

The electrolyte solution may further contain an additive, examples of which include cyclic sulfonic acid esters (propane sultone, etc.), ethylene sulfites (ethylene sulfite, etc.), cyclic carbonates (vinylene carbonate, fluoroethylene carbonate, etc.), nitrile compounds (adiponitrile, succinonitrile, etc.), isocyanates (hexamethylene diisocyanate, 1,3-bis(isocyanatomethyl)cyclohexane, isophorone diisocyanate, etc.), cyclic imides (phthalimide, hydroxyphthalimide, etc.), and phthalic acid esters (dimethyl phthalate, diethyl phthalate, etc.).

(Separator)

The lithium primary battery usually includes a separator interposed between the positive electrode and the negative electrode. As the separator, a porous sheet formed of an electrically insulating material having tolerance against the internal environment of the lithium primary battery may be used. Specific examples thereof include a nonwoven fabric made of synthetic resin, a microporous film made of synthetic resin, and a laminate of them.

Examples of the synthetic resin used for the nonwoven fabric include polypropylene, polyphenylene sulfide, and polybutylene terephthalate. Examples of the synthetic resin used for the microporous film include polyolefin resins, such as polyethylene, polypropylene, and ethylene-propylene copolymer. The microporous film may contain inorganic particles, as necessary. The thickness of the separator is, for example, 5 $\mu$m or more and 100 $\mu$m or less.

The structure of the lithium primary battery is not particularly limited. The lithium primary battery may be a coin battery including a laminated electrode group formed by laminating a disc-shaped positive electrode and a disc-shaped negative electrode, with a separator interposed therebetween. It may be a cylindrical battery including a wound electrode group formed by spirally winging a belt-shaped positive electrode and a belt-shaped negative electrode, with a separator interposed therebetween.

FIG. 1 is a front view, partially in section, of a lithium primary battery according to one embodiment of the present disclosure. In a lithium primary battery 10, an electrode group formed by winding a positive electrode 1 and a negative electrode 2, with a separator 3 interposed therebetween is housed in a battery case 9, together with an electrolyte solution (not shown). A sealing plate 8 is attached at the opening of the battery case 9. To the sealing plate 8, a positive electrode lead 4 connected to a current collector 1a of the positive electrode 1 is connected. A negative electrode lead 5 connected to the negative electrode 2 is connected to the battery case 9. On the upper and lower sides of the electrode group, an upper insulating plate 6 and a lower insulating plate 7 are respectively disposed, in order to prevent an internal short circuit.

<<Supplementary notes>>

The above description of embodiments discloses the following techniques.

(Technique 1)

A lithium primary battery, comprising:

a positive electrode; a negative electrode; and an electrolyte solution, wherein
the positive electrode contains at least one selected from the group consisting of manganese dioxide and fluorinated graphite,
the negative electrode includes a lithium alloy,
the lithium alloy contains magnesium,
a content of the magnesium in the lithium alloy is 10 mass% or less,
the electrolyte solution contains a nonaqueous solvent and a solute, and
the solute includes a sulfonylimide compound.

(Technique 2)

The lithium primary battery according to technique 1, wherein

the lithium alloy contains aluminum, and
a total content of the magnesium and the aluminum in the lithium alloy is 0.01 mass% or more and 10 mass% or less.

(Technique 3)

The lithium primary battery according to technique 2, wherein a molar ratio of the magnesium to the aluminum in the lithium alloy is 0.05 or more and 13 or less.

(Technique 4)

The lithium primary battery according to any one of techniques 1 to 3, wherein the sulfonylimide compound includes lithium bis(fluorosulfonyl)imide.

(Technique 5)

The lithium primary battery according to any one of techniques 1 to 4, wherein a content of the sulfonylimide compound in the electrolyte solution is 0.1 mass% or more and 20 mass% or less.

[Examples]

The present disclosure will be more specifically described below with reference to Examples and Comparative Examples. The present disclosure, however, is not limited to the following Examples.

<<Batteries A1 to A11 and batteries B1 to B5>>

(Production of positive electrode)

To 100 parts by mass of a positive electrode active material, 5 parts by mass of Ketjen black serving as a conductive agent, 5 parts by mass of polytetrafluoroethylene serving as a binder, and an appropriate amount of pure water were added, and kneaded together, to prepare a wet-state positive electrode mixture. The positive electrode active material used here was electrolytic manganese dioxide ($MnO_2$) subjected to firing at 400 °C for 5 hours, or fluorinated graphite (($CF)_n$).

Next, the positive electrode mixture was packed into a positive electrode current collector formed of a 0.1-mm-thick expanded metal made of stainless steel, to prepare a positive electrode precursor. Thereafter, the positive electrode precursor was dried, and rolled with a roll press, followed by cutting into a size of 3.5 cm long and 20 cm wide, to obtain a positive electrode. Subsequently, a part of the packed positive electrode mixture was peeled off, and one end of a positive electrode lead made of stainless steel was resistance-welded to the exposed part of the positive electrode current collector.

(Production of negative electrode)

A negative electrode was obtained by cutting a lithium alloy foil (thickness 250 μm) into a size of 3.7 cm long and 22 cm wide. One end of a negative electrode lead made of nickel was connected to a predetermined point on the negative electrode by pressure welding. The elements other than Li contained in the lithium alloy foil were Mg and/or Al. The Mg content and the Al content in the lithium alloy foil were set to the values shown in Table 1. The symbol "-" in the column of Mg content (or Al content) in Table 1 means that the Mg amount (or Al amount) was below the detection limit in a composition analysis (ICP atomic emission spectroscopy, etc.).

(Formation of electrode group)

An electrode group was formed by winding the positive electrode and the negative electrode, with a separator interposed therebetween. The separator used here was a 25-μm-thick microporous film made of polypropylene.

(Preparation of electrolyte solution)

An electrolyte solution was prepared by dissolving a lithium salt in a mixed solvent of PC, EC, and DME (volume ratio 3:2:5). In batteries A2 to A11 and batteries B3 and B5, lithium bis(fluorosulfonyl)imide (LiFSI) was used as the lithium salt, with the LiFSI content in the electrolyte solution set to the values shown in Table 1. In a battery A1, $LiCF_3SO_3$ (10 mass%) and LiFSI (0.1 mass%) were used as the lithium salt. In batteries B1, B2, and B4, $LiCF_3SO_3$ (10 mass%) was used as the lithium salt. Note that the numerical value (mass%) in the parentheses is the content in the electrolyte solution.

(Fabrication of lithium primary battery)

The electrode group was housed in a cylindrical battery case also serving as a negative electrode terminal. An iron case (outer diameter 17 mm, height 45.5 mm) was used as the battery case. Next, after injecting the electrolyte solution into the battery case, the opening of the battery case was closed using a metal sealing plate also serving as a positive electrode terminal. The other end of the positive electrode lead was connected to the sealing plate, and the other end of the negative electrode lead was connected to the inner bottom surface of the battery case. In this way, a lithium primary battery was produced. The battery immediately after fabrication was discharged at 1 A for 1 minute, and then aged for 3 days in a 45 °C atmosphere. Note that batteries A1 to A11 in Table 1 are of Examples, and batteries B1 to B5 are of Comparative Examples.

The obtained batteries of Examples and Comparative Examples were each evaluated for the pulse discharge characteristics (output characteristics) as follows.

[Evaluation]

(Initial output voltage and output voltage after storage)

The aged battery was subjected to a 1-second pulse discharge at 200 mA in a -30 °C environment, and the lowest voltage at this time was determined as an initial output voltage X1.

Subsequently, in a 25 °C environment, the battery was discharged at a constant current of 2.5 mA until the depth of discharge (DOD) reached 75% (until the discharged quantity of electricity reached 75% of the battery capacity). The discharged battery was stored in a 70 °C environment for 120 days. The battery after storage was subjected to a pulse discharge in the same manner as above, and the lowest voltage at this time was calculated as an output voltage X2 after storage.

(Output deterioration rate)

Using the X1 and X2 obtained above, an output degradation rate was calculated from a formula (X1 - X2) / X1 × 100.

The evaluation results are shown in Table 1. The output voltages in Table 1 are expressed as relative values (indexes), with the initial output voltage of the battery B1 (Comparative Example 1) taken as 100.

[Table 1]

| Li primary battery | positive electrode | negative electrode (Li alloy) | | | | electrolyte solution | evaluation | | |
| --- | --- | --- | --- | --- | --- | --- | --- | --- | --- |
| | | Al content (mass%) | Mg content (mass%) | Al+Mg content (mass%) | Mg/Al molar ratio | LiFSI content (mass%) | initial output voltage (index) | output voltage after storage (index) | output degradation rate (%) |
| Al | $MnO_2$ | - | 0.8 | 0.8 | - | 0.1 | 101 | 75 | 25.7 |
| A2 | $MnO_2$ | - | 0.5 | 0.5 | - | 4.5 | 102 | 80 | 21.6 |
| A3 | $MnO_2$ | - | 0.01 | 0.01 | - | 6.9 | 102 | 78 | 23.5 |
| A4 | $MnO_2$ | - | 2 | 2 | - | 10 | 104 | 81 | 22.1 |
| A5 | $MnO_2$ | - | 7 | 7 | - | 15 | 106 | 84 | 20.8 |
| A6 | $MnO_2$ | - | 10 | 10 | - | 20 | 101 | 78 | 22.8 |
| A7 | $MnO_2$ | 0.01 | 0.1 | 0.11 | 11.10 | 4.7 | 102 | 83 | 18.6 |
| A8 | $MnO_2$ | 0.5 | 5.5 | 6 | 12.21 | 6 | 105 | 89 | 15.2 |
| A9 | $MnO_2$ | 1.5 | 8.5 | 10 | 6.29 | 10 | 105 | 88 | 16.2 |
| A10 | $MnO_2$ | 0.2 | 0.01 | 0.21 | 0.055 | 5.2 | 101 | 82 | 17.8 |
| A11 | $(CF)_n$ | 0.5 | 2 | 2.5 | 4.44 | 4.5 | 100 | 80 | 20.0 |
| B1 | $MnO_2$ | 0.2 | - | 0.2 | - | - | 100 | 69 | 31.0 |
| B2 | $MnO_2$ | - | 0.7 | 0.7 | - | - | 99 | 70 | 29.3 |
| B3 | $MnO_2$ | 0.2 | - | 0.2 | - | 10 | 100 | 73 | 27.0 |
| B4 | $MnO_2$ | 0.2 | 0.7 | 0.9 | 3.89 | - | 99 | 70 | 29.3 |
| B5 | $MnO_2$ | 2 | 12 | 14 | 6.66 | 9 | 100 | 72 | 28.0 |

In the batteries A1 to A11, in which a lithium alloy containing Mg and an electrolyte solution containing a sulfonylimide compound were used, the degradation in output characteristics during storage was suppressed. In particular, in the batteries A7 to A11, in which a Li-Mg-Al alloy was used, the degradation in output characteristics during storage was further suppressed.

In the batteries B1 to B4, because of using a lithium alloy (negative electrode) containing no Mg and/or an electrolyte solution containing no sulfonylimide compound, the output characteristics were degraded during storage. In the battery B5, in which an electrolyte solution containing a sulfonylimide compound was used, but the Mg content in the lithium alloy was more than 10 mass%, the initial output voltage and the output voltage after storage were both low, resulting in an increased output degradation rate.

As compared to in the battery B1, in which a Li-Al alloy containing no Mg was used for the negative electrode, and no sulfonylimide compound was used for the lithium salt in the electrolyte solution, in the battery B2, in which a Li-Mg alloy foil was used for the negative electrode, and no sulfonylimide compound was used for the lithium salt in the electrolyte solution, almost no improvement in output characteristics during storage was observed (output degradation rate: 31.0% → 29.3%).

In the battery B3, in which a Li-Al alloy containing no Mg was used for the negative electrode, and an electrolyte solution containing a sulfonylimide compound (LiFSI) in an amount of 10 mass% in, as compared to in the battery B1, the improvement in output characteristics during storage was so small (output reduction rate: 31.0% → 27.0%).

In the battery A4, in which a Li-Mg alloy, and an electrolyte solution containing a sulfonylimide compound (LiFSI) in an amount of 10 mass% were used, as compared to in the battery B1, the output characteristics during storage were significantly improved (output degradation rate: 31.0% → 22.1%). The foregoing indicates that when the lithium alloy of the negative electrode contains Mg, and the electrolyte solution contains a sulfonylimide compound, the degradation suppression effect of the output characteristics during storage can be remarkably obtained.

[Industrial Applicability]

The lithium primary battery of the present disclosure is suitably applicable, for example, as a main power source for various meters (e.g., smart meters for electricity, water, gas, etc.) and a memory backup power source.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1      positive electrode
1a     positive electrode current collector
2      negative electrode
3      separator
4      positive electrode lead
5      negative electrode lead
6      upper insulating plate
7      lower insulating plate
8      sealing plate
9      battery case
10     lithium primary battery

**Claims**

1.  A lithium primary battery, comprising:

    a positive electrode; a negative electrode; and an electrolyte solution, wherein
    the positive electrode contains at least one selected from the group consisting of manganese dioxide and fluorinated graphite,
    the negative electrode includes a lithium alloy,
    the lithium alloy contains magnesium,
    a content of the magnesium in the lithium alloy is 10 mass% or less,
    the electrolyte solution contains a nonaqueous solvent and a solute, and
    the solute includes a sulfonylimide compound.

2.  The lithium primary battery according to claim 1, wherein

    the lithium alloy contains aluminum, and
    a total content of the magnesium and the aluminum in the lithium alloy is 0.01 mass% or more and 10 mass% or less.

3.  The lithium primary battery according to claim 2, wherein a molar ratio of the magnesium to the aluminum in the lithium alloy is 0.05 or more and 13 or less.

4.  The lithium primary battery according to claim 1, wherein the sulfonylimide compound includes lithium bis(fluorosulfonyl)imide.

5.  The lithium primary battery according to claim 1, wherein a content of the sulfonylimide compound in the electrolyte solution is 0.1 mass% or more and 20 mass% or less.

# FIG. 1

## INTERNATIONAL SEARCH REPORT

| International application No. |
|---|
| **PCT/JP2024/023003** |

**A. CLASSIFICATION OF SUBJECT MATTER**

*H01M 6/16*(2006.01)i; *H01M 4/40*(2006.01)i
FI:   H01M6/16 A; H01M4/40

According to International Patent Classification (IPC) or to both national classification and IPC

**B. FIELDS SEARCHED**

Minimum documentation searched (classification system followed by classification symbols)

H01M6/16; H01M4/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-521074 A (EAGLEPICHER TECHNOLOGIES, LLC) 10 September 2012 (2012-09-10) | 1-5 |
| A | JP 2012-248280 A (PANASONIC CORPORATION) 13 December 2012 (2012-12-13) | 1-5 |
| A | JP 2016-184572 A (PANASONIC CORPORATION) 20 October 2016 (2016-10-20) | 1-5 |
| A | JP 2011-192627 A (ENAX INC.) 29 September 2011 (2011-09-29) | 1-5 |
| A | WO 2012/066709 A1 (PANASONIC CORPORATION) 24 May 2012 (2012-05-24) | 1-5 |

☐ Further documents are listed in the continuation of Box C.      ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/023003**

| Patent document cited in search report | | | Publication date (day/month/year) | Patent family member(s) | | | Publication date (day/month/year) |
|---|---|---|---|---|---|---|---|
| JP | 2012-521074 | A | 10 September 2012 | US | 2010/0221616 | A1 | |
| | | | | WO | 2010/107877 | A1 | |
| | | | | EP | 2359426 | A1 | |
| JP | 2012-248280 | A | 13 December 2012 | WO | 2011/039924 | A1 | |
| JP | 2016-184572 | A | 20 October 2016 | US | 2016/0285128 | A1 | |
| | | | | CN | 106025270 | A | |
| JP | 2011-192627 | A | 29 September 2011 | (Family: none) | | | |
| WO | 2012/066709 | A1 | 24 May 2012 | US | 9190655 | B2 | |
| | | | | CN | 103210535 | A | |

Form PCT/ISA/210 (patent family annex) (July 2022)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58209862 A
- JP 2012138225 A
- WO 2012066709 A
- JP 2013125696 A